# EUROPEAN PATENT APPLICATION

(11) **EP 2 194 240 A1**
(43) Date of publication of application: **09.06.2010**
(21) Application number: 08170808.3
(22) Date of filing: 05.12.2008
(51) Int. Cl.: F01L 1/047

(54) **Camshaft speed sensor target**

(71) Applicant: Perkins Engines Company Limited, Eastfield Peterborough PE1 5NA (GB)
(72) Inventor: The designation of the inventor has not yet been filed
(74) Representative: Hatzmann, Martin

(57) **Abstract**

A method of constructing a speed target on a camshaft in a combustion engine is disclosed. In applying the method a multiple number of ring segments are positioned around a portion of the camshaft. The multiple number of ring segments form a closed ring having a variable outer magnetic surface for reading by a speed sensor. Further, the multiple number of ring segments are secured in a radial direction and in a circumferential direction with respect to the camshaft.

## Description

### Technical Field

The present disclosure is directed to a camshaft system for a combustion engine and, more particularly, to a camshaft system having a speed target.

### Background

A camshaft system of a combustion engine comprises a camshaft for driving valves of the cylinders. Commonly, the camshaft system also comprises a speed target radially extending from the camshaft and integrally formed therewith for enabling a cam rotation sensor to detect a rotation angle of the camshaft.

Machining the speed target into the camshaft is a relatively expensive process. Further, if an error occurs during the machining process, repairing is in practice not economically attractive. In addition, if the integrally formed speed target is damaged during operation of the combustion engine, restoring the camshaft system in the original state is rather expensive. The entire camshaft has to be repaired or replaced.

The European patent publication EP 1 471 213 discloses a ring-shaped flange having a speed target, the flange being manufactured separately from the camshaft. During assembly, the flange is attached to an axial end portion of the camshaft. Due to the modular approach, the manufacturing process might be cheaper. Further, in case of damage, the speed target flange can be replaced while maintaining the camshaft.

However, the number of locations on the camshaft that are suitable for assembling the separate speed target flange disclosed in EP '213, is restricted due to the presence of lobes, also called cams, on axial positions of the camshaft. The lobes have an outer diameter that is larger than the outer diameter of the camshaft. Since the speed target has to be assembled on the camshaft, the inner diameter of the speed target is smaller than the outer diameter of the lobes. As a consequence, the speed target flange can not slide over the lobes. Therefore, the speed target flange of EP `213 can not be placed between lobes without splitting the camshaft into multiple pieces. If the camshaft is of an integral, one-piece construction, this is impossible. As a result, the only practical axial position of the speed target flange is at an axial end portion of the camshaft.

The camshaft system of the present disclosure solves one or more of the problems set forth above.

### Summary of the Invention

One aspect of the present disclosure is directed to a method of constructing a speed target on a camshaft in a combustion engine. The method may include positioning a multiple number of ring segments around a portion of the camshaft, the multiple number of ring segments forming a closed ring having a variable outer magnetic surface for reading by a speed sensor. Further, the method may include securing the multiple number of ring elements in a radial direction and in a circumferential direction with respect to the camshaft.

Another aspect of the present disclosure is directed to a camshaft system for a combustion engine. The camshaft system may include a camshaft. Further, the camshaft may include a speed target including a multiple number of ring segments positioned around a portion of the camshaft, the multiple number of ring segments forming a closed ring having a variable outer magnetic surface for reading by a speed sensor, wherein the multiple number of ring segments are secured in a radial direction and in a circumferential direction with respect to the camshaft.

Yet another aspect of the present disclosure is directed to a speed target for assembling on a camshaft of a combustion engine. The speed target may include a multiple number of ring segments positioned around a portion of the camshaft, the multiple number of ring segments forming a closed ring having a variable outer magnetic surface for reading by a speed sensor, wherein the multiple number of ring segments are secured in a radial direction and in a circumferential direction with respect to the camshaft.

### Brief Description of the Drawings

Fig. 1 is a schematic partial perspective view of an exemplary disclosed combustion engine;

Fig. 2 is a schematic partial perspective view of an exemplary camshaft system;

Fig. 3 is a more detailed schematic partial perspective view of the camshaft system of Fig. 2;

Fig. 4 is a schematic partial elevational cross sectional view of a further camshaft system;

Fig. 5 is a schematic partial elevational cross sectional view of yet a further exemplary camshaft system;

Fig. 6 is a schematic cross sectional view of another exemplary camshaft system; and

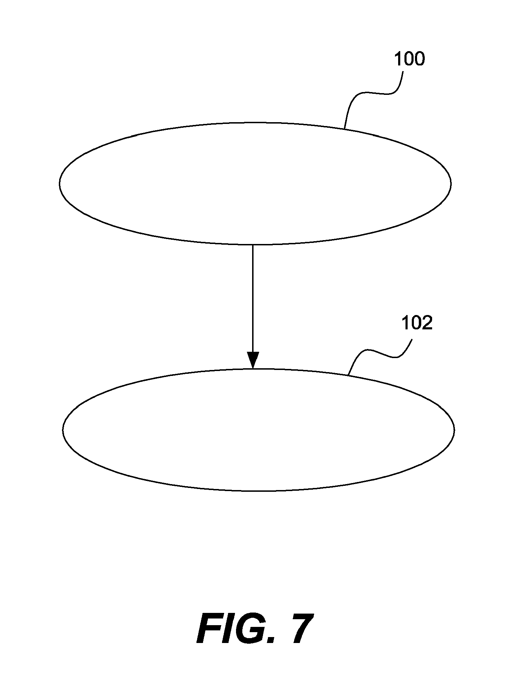

Fig. 7 is a flow chart illustrating an exemplary method of constructing a speed target on a camshaft in a combustion engine.

### Detailed Description

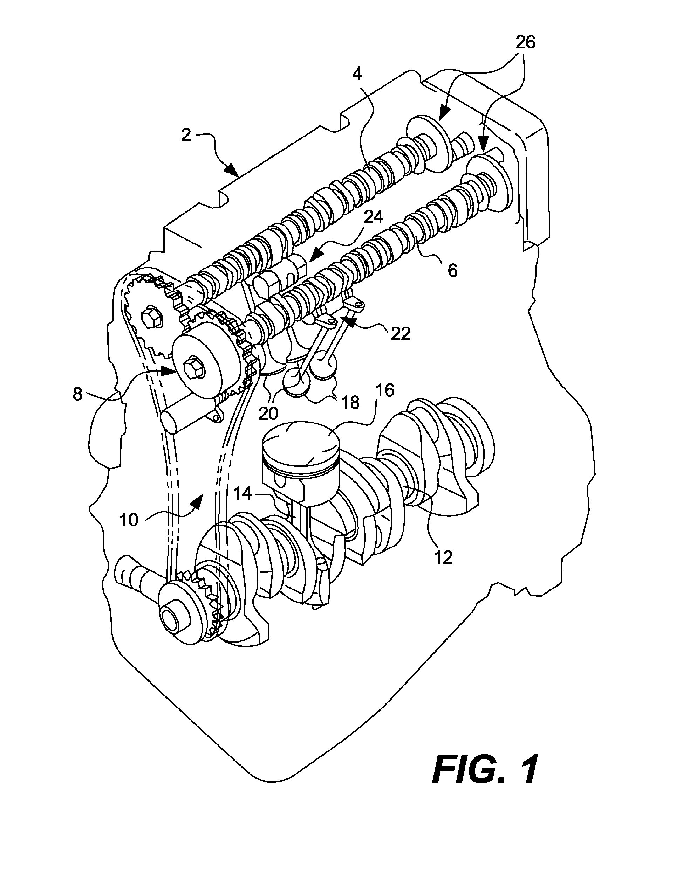

Fig. 1 is a schematic partial perspective view of an exemplary disclosed combustion engine 2. Combustion engines are typically used for driving vehicles, such as cars and construction machines. A combustion engine can embody any type of internal combustion engine, such as, for example, a gasoline or a gaseous fuel-powered engine.

As illustrated, the combustion engine 2 may include a camshaft system for a combustion engine, the camshaft system having a first camshaft 4 and a second camshaft 6. The second camshaft 6 may include, at a first end, a first valve characteristics changing device 8. Further, the combustion engine 2 may include a chain/sprocket mechanism 10 and a crankshaft 12 that is interconnected to the first and the second camshaft 4, 6, respectively, via the chain/sprocket mechanism 10 such that the camshaft rotation speed is half the crankshaft rotation speed. The crankshaft 12 may be connected, via connecting rods 14, to a number of pistons 16, one of them being shown in Fig. 1. The combustion engine 2 may further include two intake valves 18 and two exhaust valves 20 per piston 16, driven by the second camshaft 6 and the first camshaft 4, respectively. The engine 2 may further include a second valve characteristics changing device 22 and a third valve characteristics changing device 24 for changing a valve lift and opening angle of respective valves 18, 20.

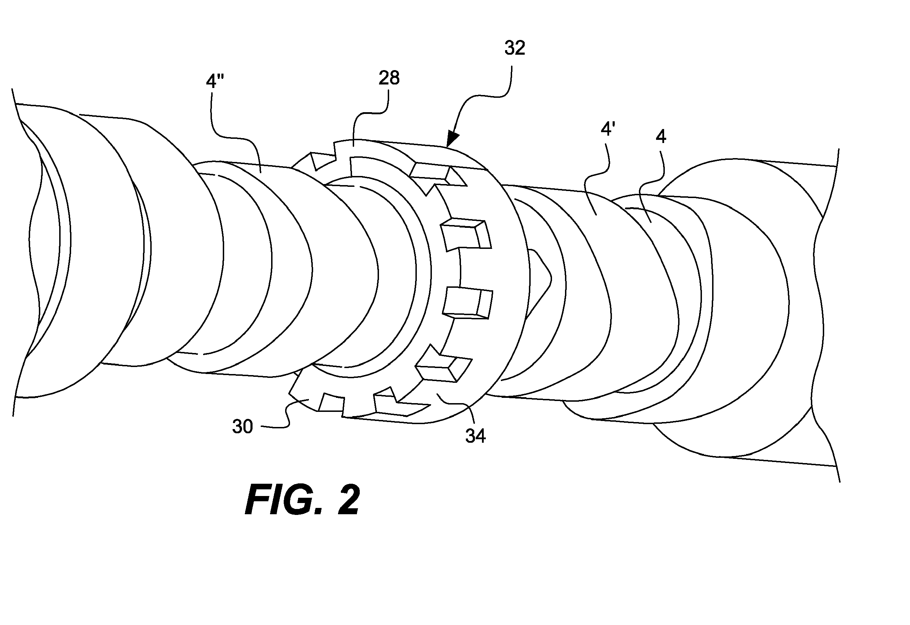

The camshaft system may further include, on the first camshaft 4 and on the second camshaft 6, respectively, a speed target 26 for reading by a speed sensor so as to enable an angular position measurement of the first and second camshaft 4, 6, respectively. The speed target 26 may be positioned at an end of the camshaft 4, 6 remote from the chain/sprocket mechanism 10, thereby counteracting any damage to the speed target 26 caused either by handling abuse or auxiliary drive belt lash. The speed target 26 as shown in Fig. 1 is described in more detail referring to Figures 2-5.

Fig. 2 is a schematic partial perspective view of an exemplary camshaft system. The camshaft system may include a camshaft 4 wherein a multiple number of ring segments 28, 30 may be positioned around a portion of the camshaft 4 thus forming a ring-shaped speed target 32 enclosing the camshaft 4. The multiple number of ring segments may include two half-ring segments 28, 30. The half-ring segments 28, 30 may have a variable outer magnetic surface 34 for reading by a speed sensor. As illustrated, the variable outer magnetic surface 34 may include protruding portions extending in a radial direction away from the camshaft. The variable outer magnetic surface 34 may be formed by a manufacturing operation such as forging or casting. Further, the two half-ring segments 28, 30 may be secured in a radial direction and a circumferential direction with respect to the camshaft 4.

The two half-ring segments 28, 30 may be located in an axial position between radially extending portions of the camshaft, as an example between a first lobe 4' and a second lobe 4" on the camshaft 4. The outer diameter of the lobes 4', 4" may be greater than the inner diameter of the closed ring that is formed by the two half-ring segments 28, 30.

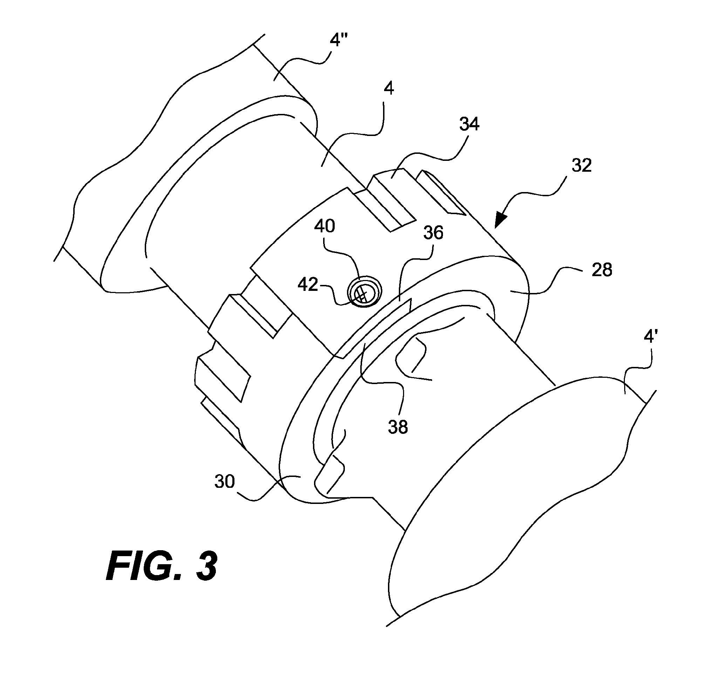

Fig. 3 is a more detailed schematic partial perspective view of the camshaft system as shown in Fig. 2. As illustrated, a portion 36 of the first half-ring segment 28 may overlap a portion 38 of the second half-ring segment 30. In said portions 36, 38 the half-ring segment 28, 30 may include a pair of bores 40 that have been aligned. A pin 42 passes through said pair of bores 40 into a bore 44 that might be included on the camshaft 4, so that the segments 28, 30 have been fixed on the camshaft 4. At the diametrically opposite location of the camshaft the half-ring segments may be secured to the camshaft in a similar way. Since the pin may traverse through overlapping portions and each half-ring segment 28, 30 engages at the pin at two diametrically opposite locations, a single pin 42 may be used to secure the half-ring segments 28, 30. The segments 28, 30 may be secured to the camshaft 4 by pinning through each other at overlapping portions.

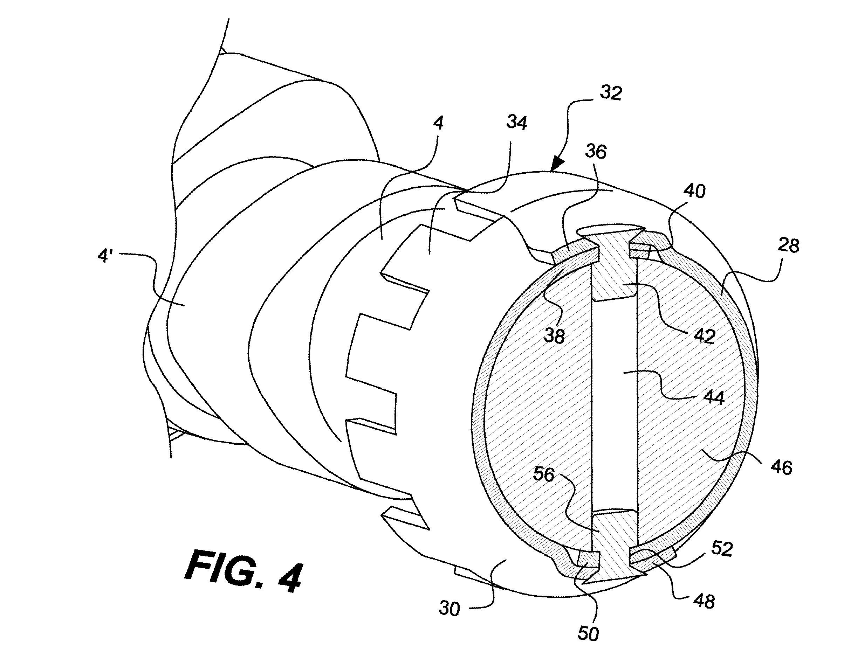

Fig. 4 is a schematic partial elevational cross sectional view of a further exemplary camshaft system 2. Here, the variable outer magnetic surface 34 may be formed using pressed steel components. However, the surface 34 can also be formed using another technique, e.g. by sintering, also known as metallurgy. In Fig. 4, a cross sectional view is shown at the location of the pin 42 passing through the pair of bores 40 in the half-ring segments 28, 30 into a bore on the camshaft 4. As illustrated, the pin may be implemented as a rivet 42 for securing the half-ring segments 28, 30 to the camshaft 4. As further illustrated, the bore 44 on the camshaft 4 may be implemented as a through hole extending from a first side of the camshaft 4 through a kernel 46 of the camshaft to a second side of the camshaft, opposite to the first side. As a result, a single bore 44 on the camshaft 4 can be used for securing the half-ring segments 28, 30 at opposite sides of the camshaft 4. At a side opposite to the region wherein the half-ring segments 28, 30 overlap at portions 36, 38, a similar securing construction may be applied. Also at the opposite side the half-ring segments 28, 30 overlap at further portions 48, 50, respectively. Similarly, a second pin 56 may pass through a pair of mutually aligned bores 52 into the through bore 44 in the camshaft 4. Hence, two separate pins 42, 56 may be used for securing the half-ring segments 28, 30. It is noted that, as an alternative to the single through bore 44, also two blind holes can be used for securing the half-ring segments 28, 30 at opposite sides of the camshaft 4. Further, more than two holes can be applied, e.g. four holes for securing the half-ring segments at four holes to the camshaft. The application of multiple bores might help ensuring that the angular position of the target segments with respect to the camshaft is correct. As an example, by using two bores at asymmetric locations, it can be avoided that the segments are misaligned over an angle of e.g. 180° degrees. In general, multiple pin-hole connections may be applied for securing the half-ring segments 28, 30 in a circumferential, longitudinal and/or axial direction to the camshaft 4. However, the half-ring segments 28, 30 can also be connected to the camshaft via a single pin-hole connection. In addition, also further fasteners may be applied, such as a screw connection, a bolt-nut connection or a glue connection.

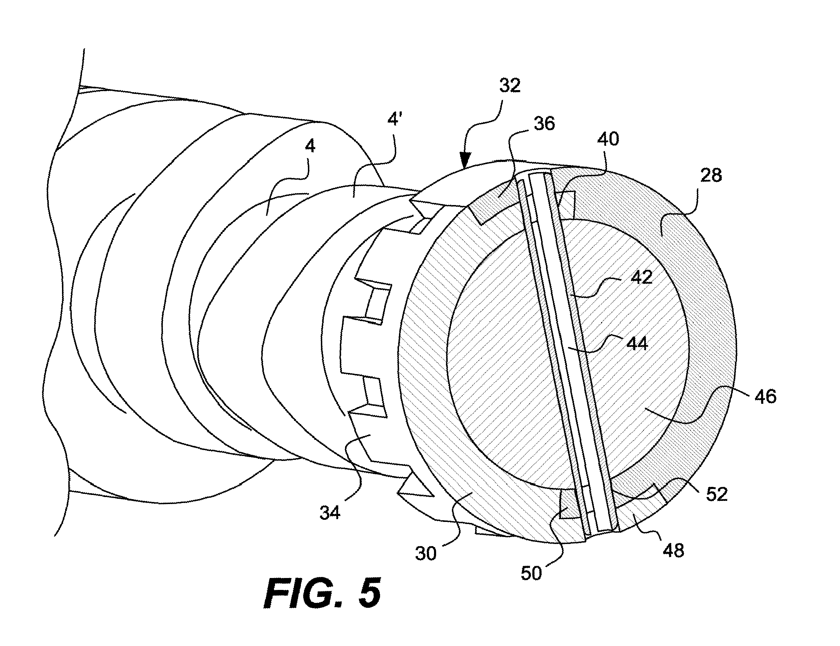

Fig. 5 is a schematic partial elevational cross sectional view of yet a further exemplary camshaft system. Similar to the exemplary camshaft system shown in Fig. 2 and 3, the variable outer magnetic surface 34 may be formed by a manufacturing operation such as a forging operation, or casting or sintering. As illustrated, the pin passing through the pair of bores 40 in the half-ring segments portions 36, 38 into the through bore 44 and through the pair of bores 52 in the half-ring segments portions 48, 50 at the opposite side of the camshaft 4, may be implemented as a single roll pin or spring dowel, thereby simplifying an assemblage process of the camshaft system.

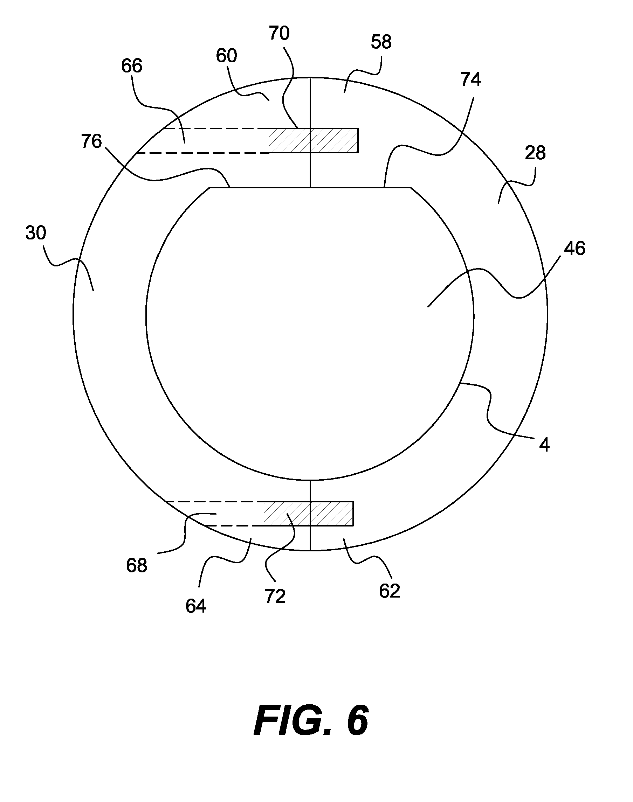

Fig. 6 is a schematic cross sectional view of another exemplary camshaft system. Here, two half-ring segments 28, 30 may have been arranged in a relative position around a portion of the kernel 46 of the camshaft 4. A first end portion 58 of a first segment 28 may abut against a first end portion 60 of the second segment 30. Similarly, a second end portion 62 may abut against a second end portion 64 of the second segment 30, thereby forming a closed ring. Here, an individual half-ring segment may extend over merely 180°. In general, the sum of the angular extension of the individual ring segments amounts to 360°. The end portions 58, 60, 62, 64 of the first and second segment 28, 30 may be provided with bores 66, 68 that are pairs wise aligned at the corresponding end portions 58, 60, 62, 64 of said segments 28, 30. In both pairs of bores 66, 68 a pin 70, 72 may be placed, thus interconnecting the corresponding end portions of the segments so as to secure the ring segments in a radial direction. The pin 70, 72 may be implemented as a screw. Further, an inner surface of at least one ring segment may correspond with a machined outer surface of the camshaft 4. More specifically, an inner surface of at least one ring segment 28, 30 may include a flat portion 74, 76 corresponding with a flat machined outer surface portion of the camshaft 4, thereby securing the ring segments in a circumferential direction.

It is noted that, in principle, various securing method of securing the multiple number of ring segments can be applied mainly independent on whether the segments overlap or not. As an example, a pinning connection through overlapping portions of the ring segments can be applied. Alternatively, the segments may be pinned separately to the camshaft. Further, adjacent portions can be interconnected without contacting the outer surface of the camshaft. It is further noted that the speed target might include more than two ring segments, e.g. three or more ring segments positioned around a portion of the camshaft.

### Industrial Applicability

Although illustrated and described above as being utilized in conjunction with an inline cylinder engine, the camshaft system may be applicable to any combustion engine, e.g. a V-type cylinder engine. Further, the camshaft system may comprise a single camshaft for driving both the intake valves and the exhaust valves. Further, the engine may have a single intake valve and a single exhaust valve per cylinder.

During operation of the combustion engine 2, the camshaft rotation speed is half of the crankshaft rotation speed. Rotation and angular position information of the first and second camshaft 4, 6 may be monitored by a proximity sensor sensing the variable outer magnetic surface 34 of the ring-shaped speed target 32. More specifically, the proximity sensor may be positioned to catch a magnetic pulse signal when a protruding portion of the variable outer magnetic surface 34 pass along the proximity sensor. By proper interpretation of caught magnetic pulse signals angular position information and/or rotational speed information of the camshaft may be deduced, e.g. for further processing and/or controlling of the engine such as controlling a fuel flow to a combustion chamber of a cylinder or when a fuel injector sequence should start. By implementing the variable outer magnetic surface 34 as a specific contour having protrusions with different height and/or width features, specific angular positions of the camshaft may be detected, such as a top dead center location of a cylinder. Similarly, it might be determined whether the camshaft runs in a forward or backward direction. Below, a method of constructing a speed target on a camshaft in a combustion engine will now be explained.

Fig. 6 is a flow chart illustrating an exemplary method of constructing a speed target on a camshaft in a combustion engine. The method may include a step 100 of positioning a multiple number of ring segments 28, 30 around a portion of the camshaft 4, the multiple number of ring segments forming a closed ring having a variable magnetic surface 34 for reading by a speed sensor. The method may further include a step 102 of securing the multiple number of ring segments in a radial direction and in a circumferential direction with respect to the camshaft.

The method may also include positioning the multiple number of ring segments at a specific axial position around the portion of the camshaft, between axially extending portions of the camshaft. Further, the method may include arranging at least two ring segments, e.g. two half-ring segments in a relative position around a portion of the camshaft wherein an end portion 36 of a first ring segment 28 overlaps an end portion 38 of a second ring segment 30.

The method may further include a step 102 of placing at least one pin 42 through a pair of aligned bores 40 on the segments 28, 30 the pin also passing through the bores 28, 30 into a bore 44 on the camshaft. By passing through the bores of the segments 28, 30 as well as through the bore 44 on the camshaft, the single pin 42 retains both segments in place on the camshaft. The bores 40 on the segments 28, 30 may be aligned during placement of the pin 42 through the bores 40. Alternatively, the bores 40 on the segments may be aligned prior to placing the pin 42 there through. The method may further include passing the pin through a through hole 44 of the camshaft and through a further pair of aligned bores on the segments 28, 30 opposite to the pair of aligned bores 40 on the segments 28, 30, thereby realizing a single connection that secures the segments at two different, mutually opposite, locations to the camshaft.

The method may also include arranging at least two ring segments, e.g. two half-ring segments, in a relative position around a portion of the camshaft wherein an end portion 58 of a first ring segment 28 abuts against an end portion 60 of a second ring segment 30. Then, the method may include placing at least one pin 70 through a pair of aligned bores 66 in the end portions 58, 60 of the first and second ring segment 28, 30, wherein an inner surface 74 of at least one ring segment corresponds to a machined outer surfaced of the camshaft portion.

The method may further include applying a further connection of the segments 28, 30 to the camshaft, e.g. by realizing a further connection by inserting a further pin in a further pair of bores at another position on a segment. The pairs of bores can be located at different circumferential positions with respect to the camshaft. Further, the method may include positioning three or more ring segments around a portion of the camshaft, a portion of each segment overlapping another segment, and including placing pins through a pair of aligned bores of two segments, the pins also passing through said pair of aligned bores into a bore on the camshaft.

The method of constructing the speed target on the camshaft may be performed when the camshaft has already been assembled in the combustion engine or is positioned nearly in its final axial position in the combustion engine. If allowed by the outer diameter of the speed target, the method may also be applied when the camshaft itself is not yet assembled in the combustion engine. Further, the constructing method may advantageously be applied during maintenance or repairing activities, e.g. when the speed target has been damaged and replacement is desired. As such, the method may include removing a speed target from the camshaft prior to positioning the two half-ring segments around a portion of the camshaft. The removed speed target might be damaged. Further, the method can advantageously be applied when a speed target having another variable outer magnetic surface is desired, e.g. having another number of protrusions. Since the speed target may include two half-ring segments, replacement of the speed target may be a relatively easy operation as the half-ring segments may be removed and/or replaced one by one without de-assembling the camshaft itself.

Since the target is formed by a multiple number of ring segments, the target can be assembled and de-assembled at various axial locations on the camshaft, also between lobes of the camshaft, even if the outer diameter of the lobes is larger than the inner diameter of the target. This is due to the fact that the ring segments can be positioned on and removed from the camshaft following a mainly axial path. The ring segments are not required to shift over the lobes, thereby enabling a relatively easy repairing operation of the target without de-assembling the entire camshaft, while on the other hand providing a flexibility in specifying a target position at an axial position between lobes.

It will be apparent to those skilled in the art that various modifications and variations can be made to the method of constructing a speed target on a camshaft in a combustion engine of the present disclosure without departing from the scope of the disclosure. Other embodiments will be apparent to those skilled in the art from consideration of the specification and practice of the method of constructing a speed target on a camshaft in a combustion engine disclosed herein. It is intended that the specification and examples be considered as exemplary only, with a true scope of the invention being indicated by the following claims and their equivalents.

## Claims

1. A method of constructing a speed target on a camshaft in a combustion engine, comprising:
positioning a multiple number of ring segments around a portion of the camshaft, the multiple number of ring segments forming a closed ring having a variable outer magnetic surface for reading by a speed sensor; and
securing the multiple number of ring segments in a radial direction and in a circumferential direction with respect to the camshaft.

2. A method of claim 1, further including:
positioning the multiple number of ring segments at a specific axial position around the portion of the camshaft, between axially extending portions of the camshaft.

3. A method of claim 1, further including:
arranging at least two ring segments of the multiple number of ring segments in a relative position around a portion of the camshaft wherein an end portion of a first ring segment overlaps an end portion of a second ring segment.

4. A method of claim 3, further including:
placing at least one pin through a pair of aligned bores on the segments, the pin also passing through the bores into a bore on the camshaft and retaining the segments in place on the camshaft.

5. A method of claim 1, further including:
arranging at least two ring segments of the multiple number of ring segments in a relative position around a portion of the camshaft wherein an end portion of a first ring segment abuts against an end portion of a second ring segment.

6. A method of claim 5, further including:
placing at least one pin through a pair of aligned bores in the end portions of the first and second ring segment and wherein an inner surface of at least one ring segment corresponds to a machined outer surface of the camshaft portion.

7. A method of claim 1, further including:
removing a speed target from the camshaft prior to positioning the multiple ring segments around a portion of the camshaft.

8. A camshaft system for a combustion engine, comprising:
a camshaft; and
a speed target including a multiple number of ring segments positioned around a portion of the camshaft, the multiple number of ring segments forming a closed ring having a variable outer magnetic surface for reading by a speed sensor, wherein the multiple number of ring segments are secured in a radial direction and in a circumferential direction with respect to the camshaft.

9. A camshaft system of claim 8, wherein the speed target is positioned between two lobes on the camshaft, the lobes having an maximum outer diameter that is greater than the inner diameter of the closed ring.

10. A camshaft system of claim 8, wherein at least one pin passes through a pair of aligned bores on two ring segments of the multiple number of ring segments.

11. A camshaft system of claim 10, wherein the at least one pin includes a rivet.

12. A camshaft system of claim 10, wherein the at least one pin includes a roll pin.

13. A camshaft system of claim 8, wherein the multiple number of ring segments have been secured to the camshaft via a multiple number of pin-hole connections.

14. A camshaft system of claim 8, wherein the multiple number of ring segments include two half-ring segments.

15. A speed target for assembling on a camshaft of a combustion engine, comprising:
a multiple number of ring segments positioned around a portion of the camshaft, the multiple number of ring segments forming a closed ring having a variable outer magnetic surface for reading by a speed sensor, wherein the multiple number of ring segments are secured in a radial direction and in a circumferential direction with respect to the camshaft.
